# EUROPEAN PATENT APPLICATION

(11) **EP 3 598 544 A1**
(43) Date of publication of application: **22.01.2020**
(21) Application number: 18767840.4
(22) Date of filing: 07.03.2018
(51) Int. Cl.: H01M 4/62, H01G 11/38, H01M 4/13, H01M 4/139

(54) **CONDUCTIVE MATERIAL DISPERSION LIQUID FOR ELECTROCHEMICAL ELEMENT ELECTRODES, SLURRY COMPOSITION FOR ELECTROCHEMICAL ELEMENT ELECTRODES, METHOD FOR PRODUCING SAME, ELECTRODE FOR ELECTROCHEMICAL ELEMENTS, AND ELECTROCHEMICAL ELEMENT**

(30) Priority: 13.03.2017 JP 2017046958
(71) Applicant: Zeon Corporation, Tokyo 100-8246 (JP)
(72) Inventor: MURASE Tomoya, Tokyo 100-8246 (JP); SUGIMOTO Takumi, Tokyo 100-8246 (JP)
(74) Representative: Parchmann, Stefanie
(86) International application number: PCT/JP2018/008854
(87) International publication number: WO 2018/168615

(57) **Abstract**

Provided is a conductive material dispersion liquid for an electrochemical device electrode having favorable dispersibility of a conductive material and capable of preparing a slurry composition with which an electrode having favorable binding capacity between an electrode mixed material layer and a current collector and an electrochemical device having excellent cycle characteristics can be obtained. A conductive material dispersion liquid for an electrochemical device electrode comprises: a conductive carbon; a polymer; and an organic solvent, wherein the polymer is a copolymer containing 10 mass% or more and 60 mass% or less of an aromatic vinyl monomer unit and 0.1 mass% or more and 30 mass% or less of an ethylenically unsaturated nitrile monomer unit.

## Description

### TECHNICAL FIELD

The present disclosure relates to a conductive material dispersion liquid for an electrochemical device electrode, a slurry composition for an electrochemical device electrode, an electrode for an electrochemical device, an electrochemical device, and a production method for a slurry composition for an electrochemical device electrode.

### BACKGROUND

Electrochemical devices such as lithium ion secondary batteries, magnesium batteries, and electric double-layer capacitors have characteristics such as compact size, light weight, high energy-density, and the ability to be repeatedly charged and discharged, and are used in a wide range of applications. Consequently, in recent years, studies have been made to improve battery members such as electrodes for the purpose of achieving even higher electrochemical device performance.

An electrode for an electrochemical device such as a lithium ion secondary battery generally includes a current collector and an electrode mixed material layer (positive electrode mixed material layer, negative electrode mixed material layer) formed on the current collector. The electrode mixed material layer is formed, for example, by applying, onto the current collector, a slurry composition obtained by dispersing an electrode active material, a carbon material (conductive carbon) as a conductive material, and a polymer as a binder in a solvent, and drying the applied slurry composition.

In recent years, there have been attempts to improve slurry compositions used in the formation of electrode mixed material layers in order to further improve electrochemical device performance.

For example, WO 2014/185072 A1 (PTL 1) discloses the following technique: In the preparation of a slurry composition for a lithium ion secondary battery positive electrode, first, a polymer obtained by polymerization of 2-ethylhexyl acrylate, methacrylic acid, 2-acrylamide-2-methylpropane sulfonic acid, and acrylonitrile and a lithium hydroxide-containing aqueous solution are mixed with N-methylpyrrolidone to prepare a binder composition. The prepared binder composition is then mixed with a positive electrode active material and acetylene black as a conductive material to yield a slurry composition. Thus, the dispersibility of the slurry composition is enhanced, and the electrical characteristics such as cycle characteristics of the lithium ion secondary battery are enhanced.

### CITATION LIST

### Patent Literature

PTL 1: WO 2014/185072 A1

### SUMMARY

### (Technical Problem)

However, conventional slurry compositions such as that described in PTL 1 have room for improvement in achieving both favorable dispersibility of a conductive material and excellent cycle characteristics of an electrochemical device such as a lithium ion secondary battery including an electrode produced using the slurry composition.

Moreover, for electrochemical device performance improvement, it is generally required that, in an electrode produced using a slurry composition, a current collector and an electrode mixed material layer formed on the current collector are favorably bound to each other.

It could therefore be helpful to provide a slurry composition for an electrochemical device electrode with which an electrode having favorable binding capacity between an electrode mixed material layer and a current collector and an electrochemical device having excellent cycle characteristics can be obtained, and a conductive material dispersion liquid for an electrochemical device electrode having favorable dispersibility of a conductive material and capable of preparing the slurry composition.

It could also be helpful to provide an electrode for an electrochemical device having favorable binding capacity between an electrode mixed material layer and a current collector and enabling an electrochemical device to display excellent cycle characteristics, and an electrochemical device having excellent cycle characteristics.

It could further be helpful to provide a production method for a slurry composition with which an electrode having favorable binding capacity between an electrode mixed material layer and a current collector and an electrochemical device having excellent cycle characteristics can be obtained.

### (Solution to Problem)

Through extensive studies to solve the problems, the inventors focused on the following points: In preparation of a slurry composition for an electrode, rather than collectively blending an electrode active material and a conductive material, first a conductive material dispersion liquid is prepared using a conductive carbon as a conductive material, a polymer, and an organic solvent, and a copolymer having a predetermined composition is used as the polymer. The inventors then discovered that the dispersibility of the conductive material in the conductive material dispersion liquid is favorable, and the binding capacity between a current collector and an electrode mixed material layer in an electrode produced using a slurry composition containing the conductive material dispersion liquid and the electrode active material is favorable. The inventors also recognized that an electrochemical device including the electrode has excellent cycle characteristics.

To advantageously solve the problems stated above, a conductive material dispersion liquid for an electrochemical device electrode according to the present disclosure comprises: a conductive carbon; a polymer; and an organic solvent, wherein the polymer is a copolymer containing 10 mass% or more and 60 mass% or less of an aromatic vinyl monomer unit and 0.1 mass% or more and 30 mass% or less of an ethylenically unsaturated nitrile monomer unit. As a result of using the conductive carbon as a conductive material, the polymer having the predetermined composition, and the organic solvent in this way, a conductive material dispersion liquid in which the conductive material has favorable dispersibility can be obtained. The conductive material dispersion liquid can be used to produce an electrode having favorable binding capacity between an electrode mixed material layer and a current collector and an electrochemical device having excellent cycle characteristics.

In the present disclosure, the content proportion of each monomer unit can be measured using nuclear magnetic resonance (NMR) method such as ¹H-NMR.

Preferably, in the conductive material dispersion liquid for an electrochemical device electrode according to the present disclosure, the conductive carbon is conductive carbon fibers. As a result of using conductive carbon fibers as the conductive material, the cycle characteristics of the electrochemical device including the electrode produced using the slurry composition containing the conductive material dispersion liquid can be further improved.

Preferably, in the conductive material dispersion liquid for an electrochemical device electrode according to the present disclosure, the polymer further contains 0.1 mass% or more and 15 mass% or less of an ethylenically unsaturated carboxylic acid monomer unit. As a result of the polymer further containing an ethylenically unsaturated carboxylic acid monomer unit in a proportion in the foregoing predetermined range, the dispersibility of the conductive material dispersion liquid can be further enhanced, and the cycle characteristics of the electrochemical device including the electrode produced using the slurry composition containing the conductive material dispersion liquid can be further improved.

Preferably, in the conductive material dispersion liquid for an electrochemical device electrode according to the present disclosure, the polymer is an alkali metal salt. As a result of using the polymer that is an alkali metal salt, the dispersibility of the conductive material dispersion liquid can be further enhanced, and the cycle characteristics of the electrochemical device including the electrode produced using the slurry composition containing the conductive material dispersion liquid can be further improved.

To advantageously solve the problems stated above, a slurry composition for an electrochemical device electrode according to the present disclosure comprises: an electrode active material; and the above-described conductive material dispersion liquid for an electrochemical device electrode. As a result of using the electrode active material and the above-described conductive material dispersion liquid in this way, a slurry composition that can be used for the production of an electrode having favorable binding capacity between an electrode mixed material layer and a current collector and an electrochemical device having excellent cycle characteristics can be obtained. The slurry composition containing the electrode active material and the conductive material dispersion liquid typically has favorable dispersibility.

To advantageously solve the problems stated above, an electrode for an electrochemical device according to the present disclosure comprises: a current collector; and an electrode mixed material layer formed on at least one surface of the current collector using the above-described slurry composition for an electrochemical device electrode. As a result of forming the electrode mixed material layer on the current collector using the above-described slurry composition in this way, an electrode having favorable binding capacity between an electrode mixed material layer and a current collector can be obtained. The electrode can be used for the production of an electrochemical device displaying excellent cycle characteristics.

To advantageously solve the problems stated above, an electrochemical device according to the present disclosure comprises: a positive electrode; a negative electrode; an electrolyte solution; and a separator, wherein at least one of the positive electrode and the negative electrode is the above-described electrode for an electrochemical device. As a result of using the above-described electrode for an electrochemical device as at least one of the positive electrode and the negative electrode, an electrochemical device having excellent cycle characteristics can be produced.

To advantageously solve the problems stated above, a production method for a slurry composition for an electrochemical device electrode according to the present disclosure is a production method for a slurry composition for an electrochemical device electrode containing an electrode active material, a conductive carbon, a polymer, and an organic solvent, the polymer being a copolymer containing 10 mass% or more and 60 mass% or less of an aromatic vinyl monomer unit and 0.1 mass% or more and 30 mass% or less of an ethylenically unsaturated nitrile monomer unit, the production method comprising: a step A of mixing the conductive carbon, the polymer, and the organic solvent to obtain a conductive material dispersion liquid; and a step B of mixing the conductive material dispersion liquid obtained in the step A with the electrode active material to obtain a slurry composition for an electrochemical device electrode. Through the step A of mixing a conductive carbon, a polymer having a predetermined composition, and an organic solvent to obtain a conductive material dispersion liquid and the step B of obtaining a slurry composition using the conductive material dispersion liquid, a slurry composition that can be used for the production of an electrode having favorable binding capacity between an electrode mixed material layer and a current collector and an electrochemical device having excellent cycle characteristics can be obtained. The slurry composition obtained through the steps A and B typically has favorable dispersibility.

### (Advantageous Effect)

It is thus possible to obtain a slurry composition for an electrochemical device electrode with which an electrode having favorable binding capacity between an electrode mixed material layer and a current collector and an electrochemical device having excellent cycle characteristics can be obtained, and a conductive material dispersion liquid for an electrochemical device electrode having favorable dispersibility of a conductive material and capable of preparing the slurry composition.

It is also possible to obtain an electrode for an electrochemical device having favorable binding capacity between an electrode mixed material layer and a current collector and enabling an electrochemical device to display excellent cycle characteristics, and an electrochemical device having excellent cycle characteristics.

It is further possible to obtain a production method for a slurry composition with which an electrode having favorable binding capacity between an electrode mixed material layer and a current collector and an electrochemical device having excellent cycle characteristics can be obtained.

### DETAILED DESCRIPTION

One of the disclosed embodiments will be described in detail below. A conductive material dispersion liquid for an electrochemical device electrode according to the present disclosure can be used in the preparation of a slurry composition for an electrode of an electrochemical device (slurry composition for an electrochemical device electrode) such as a lithium ion secondary battery. A slurry composition for an electrochemical device electrode prepared using the conductive material dispersion liquid for an electrochemical device electrode according to the present disclosure can be used in the formation of an electrode included in an electrochemical device (electrode for an electrochemical device). An electrode for an electrochemical device produced using the slurry composition for an electrochemical device electrode according to the present disclosure can be used in the production of an electrochemical device such as a lithium ion secondary battery. The slurry composition for an electrochemical device electrode according to the present disclosure can be obtained, for example, by a production method for a slurry composition for an electrochemical device electrode according to the present disclosure.

The conductive material dispersion liquid for an electrochemical device electrode and the slurry composition for an electrochemical device electrode according to the present disclosure are particularly suitable in the formation of a positive electrode of an electrochemical device.

### (Conductive material dispersion liquid for electrochemical device electrode)

The conductive material dispersion liquid for an electrochemical device electrode according to the present disclosure contains a conductive carbon, a polymer, and an organic solvent. The polymer needs to be a copolymer containing predetermined two types of monomer units each in a proportion in a predetermined range. The conductive material dispersion liquid for an electrochemical device electrode according to the present disclosure may further contain optional additives besides the foregoing components.

Herein, the "conductive material dispersion liquid for an electrochemical device electrode" typically does not contain an electrode active material.

If the conductive material dispersion liquid for an electrochemical device electrode according to the present disclosure does not contain the predetermined polymer and the organic solvent, the conductive carbon as a conductive material cannot be dispersed favorably. If the conductive material dispersion liquid for an electrochemical device electrode according to the present disclosure does not contain the conductive carbon, the predetermined polymer, and the organic solvent, an electrode produced using a slurry composition containing the conductive material dispersion liquid cannot have favorable binding capacity between a current collector and an electrode mixed material layer, and an electrochemical device including the electrode cannot display excellent cycle characteristics.

### <Conductive carbon>

The conductive carbon typically functions as a conductive material for ensuring electrical contact within the electrode active material in the electrode mixed material layer in the electrode included in the electrochemical device such as a lithium ion secondary battery. Without the use of the conductive carbon, for example, the electrochemical device including the electrode produced using the slurry composition containing the conductive material dispersion liquid cannot display excellent electrical characteristics such as cycle characteristics and output characteristics.

Examples of the conductive carbon include conductive carbon particles such as carbon black (e.g. acetylene black, Ketjen black® (Ketjen black is a registered trademark in Japan, other countries, or both), furnace black); conductive carbon fibers such as single-walled or multi-walled carbon nanotubes (hereafter also referred to as "CNTs"; multi-walled CNTs include cup stack type), carbon nanohorns, vapor-grown carbon fibers, and milled carbon fibers obtained by sintering and then crushing polymer fibers; graphite; and conductive carbon sheets such as a single-layer or multilayer graphene, and carbon non-woven fabric sheet obtained by sintering non-woven fabric made of polymer fibers. One of these conductive carbons may be used individually, or two or more of these conductive carbons may be used in combination.

Of these, the conductive carbon is preferably conductive carbon fibers, more preferably conductive carbon fibers including CNTs and vapor-grown carbon fibers, and further preferably conductive carbon fibers including CNTs. If the conductive carbon is conductive carbon fibers, the frequency of contact between neighboring conductive carbon fibers can be enhanced, and highly efficient electron transfer can be achieved while forming a stable conductive path, thus providing excellent conductivity. Hence, the electrical characteristics such as cycle characteristics and output characteristics of the electrochemical device including the electrode produced using the slurry composition containing the conductive material dispersion liquid can be further improved.

In the present disclosure, for example, the "conductive carbon fibers" preferably satisfy the condition that, for 100 conductive carbon fibers randomly selected using a transmission electron microscope (TEM), the aspect ratio (major diameter/minor diameter) calculated from the maximum diameter (major diameter) and the fiber diameter in a direction orthogonal to the maximum diameter (minor diameter) is 10 or more.

Generally, conductive carbon fibers such as CNTs tend to aggregate. Accordingly, when conductive carbon fibers are used in a conductive material dispersion liquid, the conductive carbon fibers aggregate, making it difficult to achieve favorable dispersibility of the conductive material dispersion liquid. The conductive material dispersion liquid according to the present disclosure, however, contains the predetermined polymer and the organic solvent, and therefore has favorable dispersibility even in the case where conductive carbon fibers are used as the conductive carbon.

Although an example in which the conductive carbon is conductive carbon fibers including CNTs will be described below, the present disclosure is not limited to such.

### [Conductive carbon fibers including CNTs]

The conductive carbon fibers including CNTs that are suitable for use as the conductive carbon may be composed solely of CNTs, or may be a mixture of CNTs and conductive carbon fibers other than CNTs. The conductive carbon fibers including CNTs are preferably composed solely of CNTs.

### [[Specific surface area]]

The specific surface area of the conductive carbon fibers including CNTs is preferably 100 m²/g or more, and is typically 2500 m²/g or less and preferably 500 m²/g or less. If the specific surface area of the conductive carbon fibers including CNTs is not less than the foregoing lower limit, the conductive path can be formed further favorably, and the cycle characteristics and output characteristics of the electrochemical device including the electrode produced using the slurry composition containing the conductive material dispersion liquid can be further improved.

The term "specific surface area" is used in the present disclosure to refer to a nitrogen adsorption specific surface area that is measured by the BET method. The specific surface area may be adjusted either by changing the production method and/or the production conditions of the conductive carbon fibers or by combining a plurality of types of conductive carbon fibers prepared by different production methods.

### [[Average diameter]]

The average diameter of the conductive carbon fibers including CNTs is preferably 1 nm or more and more preferably 5 nm or more, and is typically 1000 nm or less and more preferably 100 nm or less. If the average diameter of the conductive carbon fibers including CNTs is not less than the foregoing lower limit, aggregation of the conductive carbon in the conductive material dispersion liquid is further suppressed, so that the dispersibility of the conductive material dispersion liquid can be further enhanced. If the average diameter of the conductive carbon fibers including CNTs is not more than the foregoing upper limit, the conductive path can be formed further favorably, and the cycle characteristics and output characteristics of the electrochemical device including the electrode produced using the slurry composition containing the conductive material dispersion liquid can be further improved.

In the present disclosure, the "average diameter" of the conductive carbon fibers can be obtained by measuring the diameters (outer diameters) of 100 conductive carbon fibers randomly selected using a TEM (transmission electron microscope) and calculating the number average diameter. The average diameter may be adjusted either by changing the production method and/or the production conditions of the conductive carbon fibers or by combining a plurality of types of conductive carbon fibers prepared by different production methods.

### [Content proportion]

The content proportion of the conductive carbon in the conductive material dispersion liquid is preferably 10 mass% or more and more preferably 20 mass% or more, and is preferably 90 mass% or less and more preferably 85 mass% or less in terms of solid content. If the content proportion of the conductive carbon is not less than the foregoing lower limit, the electrical characteristics such as cycle characteristics and output characteristics of the electrochemical device including the electrode produced using the slurry composition containing the conductive material dispersion liquid can be further improved. If the content proportion of the conductive carbon is not more than the foregoing upper limit, the dispersibility of the conductive material dispersion liquid can be further enhanced, and the electrical characteristics such as cycle characteristics and output characteristics of the electrochemical device can be further improved.

### <Polymer>

The polymer favorably disperses the conductive carbon, in the conductive material dispersion liquid containing the conductive carbon and the organic solvent. Moreover, the polymer typically holds components contained in the electrode mixed material layer of the electrode produced by forming the electrode mixed material layer on the current collector using the slurry composition containing the conductive material dispersion liquid so that the components do not become detached from the electrode mixed material layer, and functions as a binder for favorably binding the current collector and the electrode mixed material layer.

The polymer needs to be a copolymer containing 10 mass% or more and 60 mass% or less of an aromatic vinyl monomer unit and 0.1 mass% or more and 30 mass% or less of an ethylenically unsaturated nitrile monomer unit. The polymer may further contain, besides the aromatic vinyl monomer unit and the ethylenically unsaturated nitrile monomer unit, other monomer units such as an ethylenically unsaturated carboxylic acid monomer unit, a sulfonate group-containing monomer unit, and a (meth)acrylic acid ester monomer unit. If the polymer is not a copolymer containing at least an aromatic vinyl monomer unit and an ethylenically unsaturated nitrile monomer unit each in the proportion in the foregoing predetermined range, favorable dispersibility of the conductive material dispersion liquid and favorable binding capacity between the current collector and the electrode mixed material layer in the electrode produced using the slurry composition containing the conductive material dispersion liquid cannot be achieved, and the cycle characteristics of the electrochemical device including the electrode cannot be enhanced.

The polymer may further contain a fluorine-containing monomer unit, but the proportion of the fluorine-containing monomer unit in the polymer is typically 30 mass% or less, and preferably 20 mass% or less. The polymer is different from the below-described fluorine-containing polymer.

### [Aromatic vinyl monomer unit]

### [[Content proportion]]

The polymer needs to contain 10 mass% or more and 60 mass% or less of an aromatic vinyl monomer unit. The content proportion of the aromatic vinyl monomer unit in the polymer is preferably 15 mass% or more, more preferably 20 mass% or more, and further preferably 25 mass% or more, and is preferably 55 mass% or less, more preferably 50 mass% or less, further preferably 45 mass% or less, and even more preferably 35 mass% or less. If the content proportion of the aromatic vinyl monomer unit in the polymer is not less than the foregoing lower limit, the polymer sufficiently adsorbs to the conductive carbon to achieve favorable dispersibility of the conductive material dispersion liquid. When the electrode is produced using the slurry composition containing the conductive material dispersion liquid having favorable dispersibility, the conductive path in the electrode mixed material layer is formed favorably, so that favorable binding capacity between the electrode mixed material layer and the current collector can be achieved, and the electrochemical device including the electrode can display excellent cycle characteristics and output characteristics. If the content proportion of the aromatic vinyl monomer unit in the polymer is not more than the foregoing upper limit, favorable binding capacity between the electrode mixed material layer and the current collector can be achieved in the electrode produced using the slurry composition containing the conductive material dispersion liquid, and an excessively high electrolyte solution swelling ratio of the polymer can be prevented. The electrochemical device including the electrode can thus display excellent cycle characteristics and output characteristics.

### [[Composition]]

Examples of an aromatic vinyl monomer that can be used to form the aromatic vinyl monomer unit include, but are not limited to, styrene, styrene sulfonic acid and salts thereof, α-methylstyrene, p-t-butylstyrene, butoxystyrene, vinyltoluene, chlorostyrene, and vinylnaphthalene. One of these aromatic vinyl monomers may be used individually, or two or more of these aromatic vinyl monomers may be used in combination in a freely selected ratio. Of these, as the aromatic vinyl monomer, styrene (ST) is preferable in terms of further enhancing the dispersibility of the conductive material dispersion liquid.

### [Ethylenically unsaturated nitrile monomer unit]

The polymer needs to contain 0.1 mass% or more and 30 mass% or less of an ethylenically unsaturated nitrile monomer unit. The content proportion of the ethylenically unsaturated nitrile monomer unit in the polymer is preferably 5 mass% or more, more preferably 10 mass% or more, and further preferably 15 mass% or more, and is preferably 28 mass% or less, and more preferably 25 mass% or less. If the content proportion of the ethylenically unsaturated nitrile monomer unit in the polymer is not less than the foregoing lower limit, favorable binding capacity between the electrode mixed material layer and the current collector can be achieved in the electrode produced using the slurry composition containing the conductive material dispersion liquid, and the electrochemical device including the electrode can display excellent cycle characteristics. If the content proportion of the ethylenically unsaturated nitrile monomer unit in the polymer is not more than the foregoing upper limit, an excessively high electrolyte solution swelling ratio of the polymer can be prevented, and, for example, the conductive path can be kept from breaking when subjecting the electrochemical device to aging treatment (initial charging followed by retention in a heated state for a predetermined time). The electrochemical device can thus display excellent cycle characteristics and output characteristics.

### [[Composition]]

Examples of an ethylenically unsaturated nitrile monomer that can be used to form the ethylenically unsaturated nitrile monomer unit include, but are not limited to, acrylonitrile, α-halogenoacrylonitrile such as α-chloroacrylonitrile, α-alkylacrylonitrile such as α-ethylacrylonitrile, and methacrylonitrile. One of these ethylenically unsaturated nitrile monomers may be used individually, or two or more of these ethylenically unsaturated nitrile monomers may be used in combination in a freely selected ratio. Of these, as the ethylenically unsaturated nitrile monomer, acrylonitrile and methacrylonitrile are preferable, and acrylonitrile (AN) is more preferable, in terms of further enhancing the adhesiveness of the polymer.

### [Other monomer units]

Examples of other monomer units that can be contained in the polymer include an ethylenically unsaturated carboxylic acid monomer unit, a sulfonate group-containing monomer unit, and a (meth)acrylic acid ester monomer unit. Of these, in terms of further enhancing the dispersibility of the conductive material dispersion liquid, the polymer preferably further contains an ethylenically unsaturated carboxylic acid monomer unit and/or a sulfonate group-containing monomer unit. In terms of enhancing the electrolyte resistance of the polymer, i.e. the resistance of the polymer to being dissolved in an electrolyte solution, the polymer preferably further contains a (meth)acrylic acid ester monomer unit.

In the present disclosure, "(meth)acrylic acid" refers to acrylic acid and/or methacrylic acid.

### [[Ethylenically unsaturated carboxylic acid monomer unit]]

### - Composition -

Examples of an ethylenically unsaturated carboxylic acid monomer that can be used to form the ethylenically unsaturated carboxylic acid monomer unit include, but are not limited to, an ethylenically unsaturated monocarboxylic acid and derivatives thereof and an ethylenically unsaturated dicarboxylic acid, an acid anhydride thereof, and derivatives thereof. Examples of the ethylenically unsaturated monocarboxylic acid include acrylic acid, methacrylic acid, crotonic acid, 2-ethylacrylic acid, isocrotonic acid, α-acetoxyacrylic acid, β-trans-aryloxyacrylic acid, α-chloro-β-E-methoxyacrylic acid, and β-diaminoacrylic acid. Examples of the ethylenically unsaturated dicarboxylic acid include maleic acid, fumaric acid, and itaconic acid. Examples of acid anhydrides of the ethylenically unsaturated dicarboxylic acid include maleic anhydride, acrylic anhydride, methylmaleic anhydride, and dimethylmaleic anhydride. One of these ethylenically unsaturated carboxylic acid monomers may be used individually, or two or more of these ethylenically unsaturated carboxylic acid monomers may be used in combination in a freely selected ratio. Of these, as the ethylenically unsaturated carboxylic acid monomer, an ethylenically unsaturated monocarboxylic acid and an ethylenically unsaturated dicarboxylic acid are preferable, and acrylic acid (AA), methacrylic acid (MAA), and itaconic acid (IA) are more preferable.

### - Content proportion -

The content proportion of the ethylenically unsaturated carboxylic acid monomer unit in the polymer is preferably 0.1 mass% or more, more preferably 2 mass% or more, further preferably 3 mass% or more, and even more preferably 5 mass% or more, and is preferably 15 mass% or less, more preferably 13 mass% or less, further preferably 12 mass% or less, and even more preferably 10 mass% or less. If the content proportion of the ethylenically unsaturated carboxylic acid monomer unit in the polymer is not less than the foregoing lower limit, the effects of the above-described aromatic vinyl monomer unit can be further enhanced. Specifically, if the content proportion of the ethylenically unsaturated carboxylic acid monomer unit is not less than the foregoing lower limit, the polymer further adsorbs to the conductive carbon, so that the dispersibility of the conductive material dispersion liquid can be further improved. When producing the electrode using the slurry composition containing the conductive material dispersion liquid having further improved dispersibility, the conductive path in the electrode mixed material layer is formed further favorably, so that favorable binding capacity between the electrode mixed material layer and the current collector can be achieved, and the electrochemical device including the electrode can display further excellent cycle characteristics and output characteristics. If the content proportion of the ethylenically unsaturated carboxylic acid monomer unit in the polymer is not more than the foregoing upper limit, bubbling of the conductive material dispersion liquid and the slurry composition containing the conductive material dispersion liquid is suppressed, and the electrode can be produced without defects of the electrode mixed material layer formed on the current collector. The electrochemical device including the electrode can thus display further excellent cycle characteristics and output characteristics.

In the case where the polymer further contains the ethylenically unsaturated carboxylic acid monomer unit, it is preferable to further add the below-described alkali metal compound after the polymerization reaction of the polymer to make the polymer an alkali metal salt.

### [[Sulfonate group-containing monomer unit]]

### - Composition -

Examples of a sulfonate group-containing monomer that can be used to form the sulfonate group-containing monomer unit include, but are not limited to, vinyl sulfonic acid, methyl vinyl sulfonic acid, (meth)allyl sulfonic acid, (meth)acrylic acid-2-sulfoethyl, 2-acrylamide-2-methyl propane sulfonic acid, and 3-allyloxy-2-hydroxypropane sulfonic acid. One of these sulfonate group-containing monomers may be used individually, or two or more of these sulfonate group-containing monomers may be used in combination in a freely selected ratio. Of these, as the sulfonate group-containing monomer unit, 2-acrylamide-2-methyl propane sulfonic acid (AMPS) is preferable.

### - Content proportion -

The content proportion of the sulfonate group-containing monomer unit in the polymer is preferably 0.1 mass% or more, more preferably 2 mass% or more, and further preferably 5 mass% or more, and is preferably 15 mass% or less, more preferably 13 mass% or less, and further preferably 10 mass% or less. If the content proportion of the sulfonate group-containing monomer unit in the polymer is not less than the foregoing lower limit, the effects of the above-described aromatic vinyl monomer unit can be further enhanced. Specifically, if the content proportion of the sulfonate group-containing monomer unit is not less than the foregoing lower limit, the polymer further adsorbs to the conductive carbon, so that the dispersibility of the conductive material dispersion liquid can be further improved. When producing the electrode using the slurry composition containing the conductive material dispersion liquid having further improved dispersibility, the conductive path in the electrode mixed material layer is formed further favorably, so that favorable binding capacity between the electrode mixed material layer and the current collector can be achieved, and the electrochemical device including the electrode can display further excellent cycle characteristics and output characteristics. If the content proportion of the sulfonate group-containing monomer unit in the polymer is not more than the foregoing upper limit, bubbling of the conductive material dispersion liquid and the slurry composition containing the conductive material dispersion liquid is suppressed, and the electrode can be produced without defects of the electrode mixed material layer formed on the current collector. The electrochemical device including the electrode can thus display further excellent cycle characteristics and output characteristics.

In the case where the polymer further contains the sulfonate group-containing monomer unit, it is preferable to further add the below-described alkali metal compound after the polymerization reaction of the polymer to make the polymer an alkali metal salt.

### [[(Meth)acrylic acid ester monomer unit]]

### - Composition -

Examples of a (meth)acrylic acid ester monomer that can be used to form the (meth)acrylic acid ester monomer unit include, but are not limited to, acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or two or more of these (meth)acrylic acid ester monomers may be used in combination in a freely selected ratio. Of these, as the (meth)acrylic acid ester monomer, an acrylic acid alkyl ester is preferable, and an acrylic acid alkyl ester whose alkyl group has a carbon number of 4 or more is more preferable.

### - Content proportion -

The content proportion of the (meth)acrylic acid ester monomer unit in the polymer, for example, may be 5 mass% or more, and is preferably 14 mass% or more, more preferably 15 mass% or more, and further preferably 22.5 mass% or more, and may be 79.8 mass% or less, and is preferably 71 mass% or less, more preferably 60 mass% or less, and further preferably 52.5 mass% or less. If the content proportion of the (meth)acrylic acid ester monomer unit in the polymer is in the foregoing range, the effects of the above-described aromatic vinyl monomer unit, ethylenically unsaturated nitrile monomer unit, and other optional monomer units can be displayed sufficiently, while imparting electrolyte resistance to the polymer.

### [Preparation method for polymer]

The mode of polymerization of the polymer is not limited. For example, any of solution polymerization, suspension polymerization, bulk polymerization, and emulsion polymerization may be used. The polymerization reaction may be, for example, addition polymerization such as ionic polymerization, radical polymerization, or living radical polymerization. A commonly used emulsifier, dispersant, polymerization initiator, chain transfer agent, etc. may be used in the polymerization in an amount that is also the same as commonly used.

In the preparation of the polymer, in the case where the polymer further contains the above-described ethylenically unsaturated carboxylic acid monomer unit or sulfonate group-containing monomer unit, it is preferable to make the polymer an alkali metal salt by, for example, further supplying an optional alkali metal compound to the polymer obtained as described above, a dispersion liquid of the polymer, or a solution of the polymer. By making the polymer an alkali metal salt, the dispersibility of the conductive material dispersion liquid can be further enhanced.

### [[Alkali metal compound]]

Examples of the alkali metal compound suitable for use in making the polymer an alkali metal salt include alkali metal hydroxides such as lithium hydroxide, sodium hydroxide, and potassium hydroxide; alkali metal carbonates such as lithium carbonate, sodium carbonate, and potassium carbonate; and alkali metal hydrogen carbonates such as lithium hydrogen carbonate, sodium hydrogen carbonate, and potassium hydrogen carbonate. These alkali metal compounds are typically used as an aqueous solution of any concentration.

In the case of making the polymer an alkali metal salt, it is presumed that, in the conductive material dispersion liquid, at least part of alkali metal ions derived from the alkali metal compound forms a salt with the acidic group of the ethylenically unsaturated carboxylic acid monomer unit and/or the sulfonate group-containing monomer unit contained in the polymer, thus further enhancing the dispersibility of the conductive material dispersion liquid.

### [Electrolyte solution swelling ratio]

The degree of swelling of the polymer in the electrolyte solution (electrolyte solution swelling ratio) is preferably 100 % or more and more preferably 180 % or more, and is preferably less than 500 %, more preferably less than 400 %, further preferably 350 % or less, even more preferably less than 300 %, and still more preferably 270 % or less. If the electrolyte solution swelling ratio of the polymer is not less than the foregoing lower limit, the electrode mixed material layer containing the polymer in the electrochemical device takes in the electrolyte solution, so that the ion conductivity in the electrochemical device can be further enhanced. If the electrolyte solution swelling ratio of the polymer is less than the foregoing upper limit, a decrease of the binding capacity with the current collector caused by excessive swelling of the electrode mixed material layer containing the polymer in the electrochemical device and a decrease of the electrical characteristics such as output characteristics and cycle characteristics can be further suppressed.

In the present disclosure, the "electrolyte solution swelling ratio" can be measured by the measurement method described in the Examples section of the present specification.

### [Content proportion]

The content proportion of the polymer in the conductive material dispersion liquid is preferably 10 mass% or more and more preferably 15 mass% or more, and is preferably 90 mass% or less and more preferably 80 mass% or less, in terms of solid content. If the content proportion of the polymer is not less than the foregoing lower limit, the dispersibility of the conductive material dispersion liquid can be further enhanced, and the binding capacity between the electrode mixed material layer and the current collector in the electrode produced using the slurry composition containing the conductive material dispersion liquid can be further enhanced. Consequently, the electrical characteristics such as cycle characteristics and output characteristics of the electrochemical device including the electrode can be further improved. If the content proportion of the polymer is not more than the foregoing upper limit, an increase in internal resistance by the polymer in the electrochemical device is suppressed, so that the electrical characteristics such as cycle characteristics and output characteristics of the electrochemical device can be further improved.

### <Organic solvent>

Examples of the organic solvent include, but are not limited to, alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide-based organic solvents such as N,N-dimethylformamide and N-methylpyrrolidone (NMP); and aromatic hydrocarbons such as toluene, xylene, chlorobenzene, ortho-dichlorobenzene, and para-dichlorobenzene. One of these organic solvents may be used individually, or two or more of these organic solvents may be used as a mixture. Of these, in terms of more favorable dispersibility of the conductive material dispersion liquid, polar organic solvents such as NMP are preferable as the organic solvent. For example, in the case of using a water dispersion of the polymer obtained by preparing the polymer in water, water used in the preparation of the polymer may be removed before mixing with the organic solvent, or removed by evaporation after mixing the water dispersion of the polymer with the organic solvent.

### <Additives>

The conductive material dispersion liquid may further contain additives such as a surface tension regulator, a dispersant, a viscosity modifier, a reinforcing material, and an additive for electrolysis solution. The additives may be any commonly known materials that do not affect the electrochemical device reaction. For example, additives described in WO 2012/115096 A1 may be used. One of these additives may be used individually, or two or more of these additives may be used in combination in a freely selected ratio.

### <Preparation method for conductive material dispersion liquid>

The conductive material dispersion liquid for an electrochemical device electrode according to the present disclosure can be prepared by mixing the above-described conductive carbon, predetermined polymer, organic solvent, and optional additives used according to need. For example, the mixing can be performed using a typical mixing device such as a stirrer equipped with a disper blade, a bead mill, a ball mill, a sand mill, an ultrasonic disperser, a grinding machine, a homogenizer, a planetary-type mixer, a FILMIX, or a mix rotor.

### (Slurry composition for electrochemical device electrode)

The slurry composition for an electrochemical device electrode according to the present disclosure contains an electrode active material and the above-described conductive material dispersion liquid for an electrochemical device electrode. The slurry composition for an electrochemical device electrode according to the present disclosure may optionally further contain other polymers and additives besides the electrode active material and the conductive material dispersion liquid for an electrochemical device electrode.

Although an example in which the slurry composition for an electrochemical device electrode according to the present disclosure is a slurry composition for a lithium ion secondary battery electrode will be described below, the present disclosure is not limited to such.

### <Electrode active material>

### [Positive electrode active material]

As a positive electrode active material for a lithium ion secondary battery, a material that can occlude and release lithium is usually used. Examples of the positive electrode active material for a lithium ion secondary battery include, but are not limited to, known positive electrode active materials such as lithium-containing cobalt oxide (LiCoO₂), lithium manganate (LiMn₂O₄), lithium-containing nickel oxide (LiNiO₂), lithium-containing composite oxide of Co-Ni-Mn (Li(Co Mn Ni)O₂), lithium-containing composite oxide of Ni-Mn-Al, lithium-containing composite oxide of Ni-Co-Al (Li(Co Ni Al)O₂), olivine-type lithium iron phosphate (olivine iron, LiFePO₄), olivine-type manganese lithium phosphate (olivine Mn, LiMnPO₄), Li₂MnO₃-LiNiO₂-based solid solution, lithium-rich spinel compounds represented by Li₁₊ₓMn₂₋ₓO₄ (0 < X < 2), Li[Ni_{0.17}Li_{0.2}Co_{0.07}Mn_{0.56}]O₂, and LiNi_{0.5}Mn_{1.5}O₄. Of these, as the positive electrode active material for a lithium ion secondary battery, LiCoO₂, LiNiO₂, Li(Co Mn Ni)O₂, Li(Co Ni Al)O₂, Li[Ni_{0.17}Li_{0.2}Co_{0.07}Mn_{0.56}]O₂, and LiNi_{0.5}Mn_{1.5}O₄ are preferable, and LiCoO₂, Li(Co Mn Ni)O₂, Li(Co Ni Al)O₂, Li[Ni_{0.17}Li_{0.2}Co_{0.07}Mn_{0.56}]O₂, and LiNi_{0.5}Mn_{1.5}O₄ are more preferable.

The blending amount and the particle diameter of the positive electrode active material are not limited, and may be the same as those of conventionally used positive electrode active materials.

### [Negative electrode active material]

As a negative electrode active material for a lithium ion secondary battery, a known negative electrode active material may be used, without being limited thereto. Examples of the known negative electrode active material include a carbon-based active material, a silicon-based active material, and a simple substance of metal forming a lithium alloy and an alloy thereof. Of these, as the negative electrode active material, a carbon-based active material and a silicon-based active material are preferable, graphitic material and silicon oxide are more preferable, natural graphite, artificial graphite, and silicon oxide are further preferable, and artificial graphite and silicon oxide are even more preferable. One of these materials may be used individually, or two or more of these materials may be used in combination.

### <Other polymers>

Examples of other polymers that may be further contained in the slurry composition for an electrochemical device electrode according to the present disclosure include a fluorine-containing polymer and polyacrylonitrile (a polymer containing 80 mass% or more of acrylonitrile). If the slurry composition further contains the fluorine-containing polymer and/or polyacrylonitrile, precipitation of the electrode active material and the conductive material is suppressed by the viscosity modification effect, with it being possible to achieve favorable stability of the slurry composition.

### [Fluorine-containing polymer]

The fluorine-containing polymer is, for example, a homopolymer or a copolymer of one or more types of fluorine-containing monomer, or a copolymer of one or more types of fluorine-containing monomer and a non-fluorine-containing monomer.

Examples of the fluorine-containing polymer include, but are not limited to, polytetrafluoroethylene, polychlorotrifluoroethylene, polyvinylidene fluoride, polyvinyl fluoride, perfluoroalkoxy fluorine resin, tetrafluoroethylene-hexafluoropropylene copolymer, ethylene-tetrafluoroethylene copolymer, ethylene-chlorotrifluoroethylene copolymer, and vinylidene fluoride-hexafluoropropylene copolymer. Of these, as the fluorine-containing polymer, polyvinylidene fluoride (PVdF) is preferable.

The proportion of the fluorine-containing monomer unit in the fluorine-containing polymer is typically 70 mass% or more, and preferably 80 mass% or more. The proportion of the non-fluorine-containing monomer unit in the fluorine-containing polymer is typically 30 mass% or less, and preferably 20 mass% or less.

### [Content]

The content of the other polymers in the slurry composition per 100 parts by mass of the electrode active material is preferably 0.1 parts by mass or more and more preferably 0.3 parts by mass or more, and is preferably 3 parts by mass or less and more preferably 2.5 parts by mass or less. If the content of the other polymers is not less than the foregoing lower limit, the stability of the slurry composition can be further improved by the viscosity modification effect. If the content of the other polymers is not more than the foregoing upper limit, the influence on the dispersion state of the conductive material dispersion liquid as a result of being formed into a slurry composition can be suppressed, and high binding capacity between the electrode mixed material layer and the current collector in the electrode produced using the slurry composition and high cycle characteristics of the electrochemical device including the electrode can be sufficiently ensured.

### <Additives>

Additives that may be further contained in the slurry composition are not limited, and may be the same additives as those described in the "Conductive material dispersion liquid for electrochemical device electrode" section.

### <Preparation method for slurry composition>

The preparation method for the slurry composition for an electrochemical device electrode according to the present disclosure is not limited except the above-described electrode active material and predetermined conductive material dispersion liquid, and the slurry composition for an electrochemical device electrode according to the present disclosure can be prepared by mixing and dispersing these components in a dispersion medium while optionally further using other polymers and additives according to need.

As the dispersion medium, it is preferable to use liquid content such as the organic solvent contained in the conductive material dispersion liquid, and/or use the same solvent as the organic solvent contained in the conductive material dispersion liquid.

The dispersion method is not limited. For example, the slurry composition can be prepared by mixing the components and the organic solvent using a mixer such as a stirrer equipped with a disper blade, a ball mill, a sand mill, a bead mill, a pigment disperser, a grinding machine, an ultrasonic disperser, a homogenizer, a planetary mixer, or a FILMIX. Mixing of the components and the organic solvent may normally be performed for 10 min to several hr in a temperature range of room temperature to 80 °C. The organic solvent used in the preparation of the slurry composition may be the same as the organic solvent contained in the conductive material dispersion liquid according to the present disclosure.

### <Content of conductive carbon in slurry composition>

The content of the conductive carbon in the slurry composition per 100 parts by mass of the electrode active material is preferably 0.1 parts by mass or more and more preferably 0.2 parts by mass or more, and is preferably 3 parts by mass or less and more preferably 2.5 parts by mass or less. If the content proportion of the conductive carbon is not less than the foregoing lower limit, the electrical characteristics such as cycle characteristics and output characteristics of the electrochemical device including the electrode produced using the slurry composition can be further improved. If the content proportion of the conductive carbon is not more than the foregoing upper limit, the dispersibility of the conductive carbon as a conductive material in the slurry composition can be further enhanced, and the electrical characteristics such as cycle characteristics and output characteristics of the electrochemical device can be further improved.

### <Content of polymer in slurry composition>

The content of the polymer in the slurry composition per 100 parts by mass of the electrode active material is preferably 0.01 parts by mass or more, more preferably 0.1 parts by mass or more, and further preferably 0.15 parts by mass or more, and is preferably 3 parts by mass or less, more preferably 2.5 parts by mass or less, and further preferably 2 parts by mass or less. If the content proportion of the polymer is not less than the foregoing lower limit, the binding capacity between the electrode mixed material layer and the current collector in the electrode produced using the slurry composition containing the conductive material dispersion liquid can be further enhanced. Consequently, the electrical characteristics such as cycle characteristics and output characteristics of the electrochemical device including the electrode can be further improved. If the content proportion of the polymer is not more than the foregoing upper limit, an increase in resistance by the polymer in the electrochemical device is suppressed, and the electrical characteristics such as cycle characteristics and output characteristics of the electrochemical device can be further improved.

### <Viscosity of slurry composition>

The viscosity of the slurry composition at a temperature of 25 °C and a shear rate of 12.6 s⁻¹ is preferably 1000 mPa·s to 5000 mPa·s. If the viscosity of the slurry composition is in the foregoing range, the stability of the slurry composition can be further enhanced, and also the binding capacity between the electrode mixed material layer and the current collector in the electrode produced using the slurry composition can be further enhanced to enable the electrochemical device including the electrode to display further excellent cycle characteristics.

### (Electrode for electrochemical device)

The electrode for an electrochemical device according to the present disclosure includes a current collector, and an electrode mixed material layer formed on at least one surface of the current collector using the above-described slurry composition for an electrochemical device electrode. The electrode mixed material layer contains at least the above-described electrode active material, conductive carbon, and polymer. Since the electrode for an electrochemical device according to the present disclosure is formed by, for example, applying and drying the slurry composition containing the conductive material dispersion liquid according to the present disclosure, the electrode for an electrochemical device according to the present disclosure has a structure in which, in the electrode mixed material layer after the formation, the electrode active material and the conductive material are uniformly dispersed. Hence, the electrode for an electrochemical device according to the present disclosure has favorable binding capacity between the electrode mixed material layer and the current collector, and the electrochemical device can display excellent cycle characteristics.

The components contained in the electrode mixed material layer are the same as the components contained in the above-described slurry composition. The suitable ratios of these components in the electrode mixed material layer are the same as the suitable ratios of these components in the slurry composition. The electrode for an electrochemical device according to the present disclosure is particularly suitable as a positive electrode of an electrochemical device.

Although an example in which the electrode for an electrochemical device is a positive electrode for a lithium ion secondary battery will be described below, the present disclosure is not limited to such.

### <Current collector>

The current collector is a material having electrical conductivity and electrochemical durability. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio. Of these, as the current collector used in the production of the positive electrode, a thin film made of aluminum is preferable.

### <Positive electrode mixed material layer>

The positive electrode mixed material layer is formed, for example, through a step of applying the above-described slurry composition onto the current collector (application step) and a step of drying the applied slurry composition (drying step).

### [Application step]

The slurry composition can be applied onto the current collector by any commonly known method without any specific limitations. Specific examples of application methods that can be used include comma coater method, doctor blading, dip coating, reverse roll coating, direct roll coating, gravure coating, extrusion coating, and brush coating. The slurry composition may be applied onto only one or both surfaces of the current collector. The thickness of the slurry coating on the current collector after application but before drying may be set as appropriate in accordance with the thickness of the electrode mixed material layer to be obtained after drying.

### [Drying step]

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition applied on the current collector as described above, an electrode mixed material layer is formed on the current collector, thereby providing an electrode in which the current collector and the electrode mixed material layer are favorably bound.

After the drying step, the electrode mixed material layer may be further subjected to pressing treatment, such as mold pressing or roll pressing. The pressing treatment can further improve the binding capacity between the electrode mixed material layer and the current collector.

### (Electrochemical device)

The electrochemical device according to the present disclosure includes a positive electrode, a negative electrode, an electrolyte solution, and a separator, wherein at least one of the positive electrode and the negative electrode is the above-described electrode for an electrochemical device. Thus, the electrochemical device according to the present disclosure may be configured so that the positive electrode is the electrode for an electrochemical device according to the present disclosure and the negative electrode is a known negative electrode, that the negative electrode is the electrode for an electrochemical device according to the present disclosure and the positive electrode is a known positive electrode, or that the positive electrode and the negative electrode are both the electrode for an electrochemical device according to the present disclosure. Of these, the electrochemical device according to the present disclosure is preferably configured so that at least the positive electrode is the above-described electrode for an electrochemical device, and more preferably configured so that only the positive electrode is the above-described electrode for an electrochemical device. Since the electrochemical device according to the present disclosure includes the electrode for an electrochemical device according to the present disclosure, the electrochemical device according to the present disclosure has excellent cycle characteristics.

Although an example in which the electrochemical device according to the present disclosure is a lithium ion secondary battery will be described below, the present disclosure is not limited to such.

### <Positive electrode>

The positive electrode may be the above-described electrode for an electrochemical device according to the present disclosure, without being limited thereto. That is, the positive electrode may include the electrode mixed material layer formed using the slurry composition according to the present disclosure, and for example the above-described current collector. In the case where the positive electrode is not the electrode for an electrochemical device according to the present disclosure, the positive electrode may be a known positive electrode. The known positive electrode may be, for example, that described in JP 2013-145763 A.

### <Negative electrode>

The negative electrode may be the above-described electrode for an electrochemical device according to the present disclosure, without being limited thereto. That is, the negative electrode may include the electrode mixed material layer formed using the slurry composition according to the present disclosure, and any current collector. In the case where the negative electrode is not the electrode for an electrochemical device according to the present disclosure, the negative electrode may be a known negative electrode, such as a negative electrode composed of a metal thin plate, or a negative electrode including a current collector and a negative electrode mixed material layer formed on the current collector. The negative electrode mixed material layer typically contains a negative electrode active material and a binder, and may optionally contain other components such as a thickener and a conductive material. The current collector, the negative electrode active material, binder, the method of forming the negative electrode mixed material layer on the current collector, etc. may be, for example, those described in JP 2013-145763 A.

### <Electrolyte solution>

The electrolysis solution is normally an organic electrolysis solution in which a supporting electrolyte is dissolved in a non-aqueous organic solvent, without being limited thereto. For example, a supporting electrolyte is a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable and LiPF₆ is particularly preferable as these lithium salts readily dissolve in a solvent and exhibit a high degree of dissociation. The electrolyte may be one type used individually, or may be two or more types combined in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolysis solution is not limited so long as the supporting electrolyte can dissolve therein. Examples of organic solvents that can be used include: carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used.

Known additives such as vinylene carbonate (VC), fluoroethylene carbonate (FEC) and ethylmethylsulfone may be added to the electrolyte solution.

### <Separator>

Examples of the separator include, but are not limited to, a fine porous membrane using polyolefinic (polyethylene, polypropylene, polybutene, or polyvinyl chloride) resin, a fine porous membrane using resin such as polyethylene terephthalate, polycycloolefin, polyether sulfone, polyamide, polyimide, polyimideamide, polyaramide, polycycloolefin, nylon, and polytetrafluoroethylene, woven fabric or non-woven fabric using polyolefinic fiber, and an aggregate of particles made of an insulating material. Of these, a fine porous membrane using polyolefinic (polyethylene, polypropylene, polybutene, or polyvinyl chloride) resin is preferable because the entire separator can be formed with a thin film-thickness, which increases the ratio of the electrode mixed material layer in the electrochemical device such as a non-aqueous secondary battery, and consequently increases the capacity per unit volume. A fine porous membrane made of polypropylene resin is more preferable.

### <Assembly step>

The electrochemical device according to the present disclosure can be produced using a known assembly method, without any specific limitations. In detail, the electrochemical device according to the present disclosure can be produced, for example, by placing the positive electrode obtained as described above, the negative electrode, and the separator in a battery container with these components being rolled or folded as necessary in accordance with the battery shape, filling the battery container with the electrolysis solution, and sealing the battery container. In order to prevent pressure increase inside the electrochemical device and occurrence of overcharging or overdischarging, an overcurrent preventing device such as a fuse or a PTC device; an expanded metal; or a lead plate may be provided as necessary. The shape of the electrochemical device may be a coin type, button type, sheet type, cylinder type, prismatic type, flat type, or the like.

The battery members such as the positive electrode, the negative electrode, and the separator included in the electrochemical device are typically arranged so that the positive electrode is in contact with one side of the separator and the negative electrode is in contact with the other side of the separator. In more detail, the positive electrode mixed material layer side is located on one side of the separator and the negative electrode mixed material layer side is located on the other side of the separator, so as to be in contact with the separator.

### (Production method for slurry composition for electrochemical device electrode)

The production method for a slurry composition for an electrochemical device electrode according to the present disclosure is a production method for a slurry composition for an electrochemical device electrode containing an electrode active material, conductive carbon, a polymer, and an organic solvent, the polymer being a copolymer containing 10 mass% or more and 60 mass% or less of an aromatic vinyl monomer unit and 0.1 mass% or more and 30 mass% or less of an ethylenically unsaturated nitrile monomer unit, the production method comprising: a step A of mixing the conductive carbon, the polymer, and the organic solvent to obtain a conductive material dispersion liquid; and a step B of mixing the conductive material dispersion liquid obtained in the step A with the electrode active material to obtain a slurry composition for an electrochemical device electrode.

With the production method for a slurry composition according to the present disclosure that includes at least the step A of obtaining the predetermined conductive material dispersion liquid and the step B of mixing the conductive material dispersion liquid and the electrode active material to obtain the slurry composition, it is possible to produce a slurry composition with which an electrode having favorable binding capacity between an electrode mixed material layer and a current collector and an electrochemical device having excellent cycle characteristics can be obtained. The slurry composition obtained by the production method according to the present disclosure typically has the electrode active material and the conductive carbon dispersed favorably, and thus has excellent stability.

### <Step A>

In the step A, the conductive carbon, the predetermined polymer, the organic solvent, and the optional additives are mixed to obtain the conductive material dispersion liquid. The predetermined polymer used in the step A is a copolymer containing 10 mass% or more and 60 mass% or less of an aromatic vinyl monomer unit and 0.1 mass% or more and 30 mass% or less of an ethylenically unsaturated nitrile monomer unit.

The types, preferred properties, and preferred contents of the conductive carbon, the predetermined polymer, the organic solvent, and the optional additives used in the step A may be the same as the types, preferred properties, and preferred contents described in the "Conductive material dispersion liquid for electrochemical device electrode" section. The method of mixing the components may be the same as the preparation method for the conductive material dispersion liquid described in the "Conductive material dispersion liquid for electrochemical device electrode" section. Of these, a stirrer equipped with a disper blade and a bead mill are preferably used together, for favorable dispersibility.

### <Step B>

In the step B, the conductive material dispersion liquid obtained in the step A is mixed with the electrode active material and the optional other polymers and additives to obtain the slurry composition for an electrochemical device electrode. The types, preferred properties, and preferred contents of the electrode active material and the optional other polymers and additives may be the same as the types, preferred properties, and preferred contents described in the "Slurry composition for electrochemical device electrode" section. The method of mixing the components may be the same as the preparation method for the slurry composition described in the "Slurry composition for electrochemical device electrode" section. Of these, a stirrer equipped with a disper blade is preferably used.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is prepared through copolymerization of a plurality of types of monomers, the proportion of a monomer unit in the polymer that is formed through polymerization of a given monomer is normally, unless otherwise specified, the same as the ratio (charging ratio) of the given monomer among all monomers used in polymerization of the polymer.

The following methods were used to measure and evaluate the electrolyte solution swelling ratio of the polymer, the dispersibility of the conductive material dispersion liquid, the binding capacity of the electrode, and the output characteristics and cycle characteristics of the electrochemical device.

### <Electrolyte solution swelling ratio of polymer>

A polymer film with a thickness of 100 µm was produced by pouring an NMP solution of the obtained polymer into a Teflon® (Teflon is a registered trademark in Japan, other countries, or both) petri dish and drying it. The resulting polymer film was cut out to 16 mmφ in size, and the weight A of the cut polymer film was measured. Next, the cut polymer film was immersed in 20 ml of a non-aqueous electrolyte solution at a temperature of 60 °C for 72 hr. Subsequently, the immersed polymer film was removed from the non-aqueous electrolyte solution, and the weight B was measured after sufficiently wiping off the non-aqueous electrolysis solution on the surface of the polymer film. The electrolyte solution swelling ratio of the polymer = B/A × 100 (%) was calculated from the measured weights A and B. As the non-aqueous electrolyte solution, a mixed solution of LiPF₆ with a concentration 1 M as an electrolyte and ethylene carbonate (EC) / ethylmethyl carbonate (EMC) = 3/7 (mass ratio) as a solvent to which 2 vol% of vinylene carbonate (VC) was added was used. When the electrolyte solution swelling ratio is lower (closer to 100 %), the electrode structure associated with charging and discharging can be held, and the electrochemical device can display higher output characteristics and cycle characteristics. The results are listed in Table 1.

### <Dispersibility of conductive material dispersion liquid>

The dispersibility of the conductive material dispersion liquid was evaluated by measuring the viscosity stability of the conductive material dispersion liquid. Specifically, the viscosity η0 of the conductive material dispersion liquid at a temperature of 25 °C and a shear viscosity of 12.6 s⁻¹ was measured using a rheometer (produced by Anton Paar GmbH, product name "MCR302").

The conductive material dispersion liquid whose viscosity η0 had been measured was then stored still for 168 hr (7 days) in a sealed state at a temperature of 25 °C, and the viscosity η1 of the conductive material dispersion liquid after storage was measured under the same conditions as for η0. The viscosity maintenance rate Δη = η1/η0 × 100 (%) of the conductive material dispersion liquid between before and after storage was calculated, and the dispersibility of the conductive material dispersion liquid was evaluated based on the following criteria. When the viscosity maintenance rate Δη is closer to 100 %, the viscosity stability of the conductive material dispersion liquid is higher, and the conductive carbon in the conductive material dispersion liquid maintains a favorable dispersion state without aggregation. The results are listed in Table 1.
A: viscosity maintenance rate Δη of 80 % or more and less than 150 %
B: viscosity maintenance rate Δη of 60 % or more and less than 80 % or 150 % or more and less than 200 %
C: viscosity maintenance rate Δη of 40 % or more and less than 60 % or 200 % or more and less than 250 %
D: viscosity maintenance rate Δη of less than 40 % or 250 % or more.

### <Binding capacity of electrode>

The binding capacity of the electrode was evaluated by measuring the peel strength between the current collector and the positive electrode mixed material layer. Specifically, the obtained positive electrode after pressing was cut into a slit with a dimension of 1.0 cm in width by 10 cm in length, obtaining a test piece. A piece of adhesive cellophane tape was then attached to the surface of the test piece on the positive electrode mixed material layer side. The adhesive cellophane tape used was the tape prescribed by JIS Z 1522. The test piece on the current collector side was then peeled off from the cellophane tape, which was secured to a test bed, from its one end toward the other end at a rate of 50 mm/min, to measure the stress caused by the peeling. The measurement was made 10 times to calculate the average of the stress. The average, determined as the peel strength (N/m), was evaluated based on the following criteria. A greater peel strength means better binding capacity of the electrode mixed material layer to the current collector. The results are listed in Table 1.
A: peel strength of 10 N/m or more
B: peel strength of 5 N/m or more and less than 10 N/m
C: peel strength of 3 N/m or more and less than 5 N/m
D: peel strength of less than 3 N/m.

### <Output characteristics>

The obtained lithium ion secondary battery was charged with constant current at 0.2 CmA until the battery voltage reached 4.35 V and then charged with constant voltage at 4.35 V until the charging current reached 0.02 CmA. Next, the lithium ion secondary battery was discharged with constant current at 0.2 CmA until the battery voltage reached 3.87 V (charging depth SOC: 50 %), and then discharged at each of 0.2 CmA, 0.5 CmA, 1.0 CmA, 2.0 CmA, 2.5 CmA, and 3.0 CmA for 30 sec. The voltage change after the discharge was measured. Each discharge current and measured voltage change were plotted, and the inclination was taken to be the resistance (Ω). The calculated resistance was evaluated based on the following criteria. A lower resistance means better output characteristics.
A: resistance of less than 4 Ω
B: resistance of 4 Ω or more and less than 5 Ω
C: resistance of 5 Ω or more and less than 6 Ω
D: resistance of 6 Ω or more.

### <Cycle characteristics>

The obtained lithium ion secondary battery was subjected to 100 cycles of a repeated operation in which, at an ambient temperature of 45 °C, the secondary battery was charged to a battery voltage of 4.45 V at a constant current of 1 C and discharged to a battery voltage of 3 V at a constant current of 1 C. The proportion of the discharge capacity R100 at the 100th cycle to the discharge capacity R1 at the first cycle (= charge/discharge capacity retention rate (R100/R1) × 100 (%)) was calculated, and the cycle characteristics were evaluated based on the following criteria. A higher charge/discharge capacity retention rate means better high-potential cycle characteristics of the electrochemical device. The results are listed in Table 1.
A: charge/discharge capacity retention rate of 80 % or more
B: charge/discharge capacity retention rate of 75 % or more and less than 80 %
C: charge/discharge capacity retention rate of 70 % or more and less than 75 %
D: charge/discharge capacity retention rate of less than 70 %.

### (Example 1)

### <Preparation of polymer>

An autoclave equipped with a stirrer was charged with 164 parts of deionized water, 30 parts of styrene (ST) as an aromatic vinyl monomer, 20 parts of acrylonitrile (AN) as an ethylenically unsaturated nitrile monomer, 7.5 parts of methacrylic acid (MAA) as an ethylenically unsaturated carboxylic acid monomer in other monomers, 42.5 parts of 2-ethylhexyl acrylate (2EHA) as a (meth)acrylic acid ester monomer in other monomers, 0.3 parts of potassium persulfate as a polymerization initiator, and 1.2 parts of polyoxyethylene alkyl ether sodium sulfate as an emulsifier, sufficiently stirred, and then heated at a temperature of 80 °C for 3 hr and subsequently heated at a temperature of 80 °C for 2 hr to perform polymerization, to obtain a water dispersion of a polymer. The obtained water dispersion of the polymer had a solid content concentration of 37.3 %, and a polymerization conversion rate of 96 % calculated from the solid content concentration.

Next, 42.7 parts of a 3%-NaOH aqueous solution as an alkali metal compound were added to 100 parts of the obtained water dispersion of the polymer, and stirred for 5 min, to yield an alkali metal salt (Na salt) of the polymer. The obtained water dispersion of the alkali metal salt of the polymer had pH = 12.

Further, 500 parts of N-methylpyrrolidone (NMP) as an organic solvent were added to the obtained water dispersion of the alkali metal salt of the polymer, and under reduced pressure, the water and all of the residual monomer were evaporated and then 56.7 parts of NMP were evaporated, yielding an NMP solution of the polymer of 8 mass%.

Using the obtained NMP solution of the polymer, the electrolyte solution swelling ratio of the polymer was measured by the foregoing method. The results are listed in Table 1.

### <Preparation of conductive material dispersion liquid>

2.5 parts of carbon nanotubes (multi-walled CNTs, BET specific surface area: 180 m²/g to 250 m²/g, number average diameter: 10 nm) as conductive carbon, 7.5 parts of the obtained NMP solution of the polymer in terms of solid content, and 570 parts of NMP were stirred with a disper blade (rotational frequency: 2000 rpm, stirring time: 60 min), and then further stirred with a bead mill using zirconia beads of 1 mm in diameter (peripheral speed: 8 m/s, stirring time: 2 hr), to prepare a conductive material dispersion liquid with a solid content concentration of 1.5 mass%.

For the obtained conductive material dispersion liquid, the dispersibility was evaluated by the foregoing method. The results are listed in Table 1. In the evaluation of the dispersibility, η0 = 200 mPa·s.

### <Preparation of slurry composition for positive electrode>

100 parts of lithium cobaltite (LiCoO₂, volume average particle diameter: 12 µm) as a positive electrode active material and 2.0 parts of the obtained conductive material dispersion liquid in terms of solid content were stirred with a disper blade (rotational frequency: 2500 rpm, stirring time: 30 min), to yield a slurry composition for a positive electrode.

For the obtained slurry composition for a positive electrode, the viscosity measured at a temperature of 25 °C and a shear viscosity of 12.6 s⁻¹ using a rheometer (produced by Anton Paar GmbH, product name "MCR302") was 2000 mPa·s.

### <Production of positive electrode>

An aluminum foil with a thickness of 20 µm was prepared as a current collector. The obtained slurry composition for a positive electrode was then applied to one side of the aluminum foil using a comma coater so that the coating amount after drying would be 15 mg/cm². The drying was performed by conveying the aluminum foil through a 80 °C oven over a period of 2 min at a speed of 0.5 m/min. Thereafter, heat treatment was performed for 2 min in a 120 °C oven to obtain a positive electrode web. The obtained positive electrode web was rolled in sheet form by roll pressing so that the density of the positive electrode mixed material layer formed on the aluminum foil would be 3.7 g/cm³ (thickness of positive electrode mixed material layer: 41 µm), to obtain a post-pressing positive electrode having a positive electrode mixed material layer formed on one side of the current collector made of aluminum foil.

For the obtained post-pressing positive electrode, the binding capacity of the electrode (current collector and electrode mixed material layer) was evaluated by the foregoing method. The results are listed in Table 1.

### <Preparation of slurry composition for negative electrode>

A 5-MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. The pressure vessel was sufficiently stirred and polymerization was initiated by heating to 50 °C. When the polymerization conversion rate reached 96 %, cooling was performed to stop the reaction and yield a mixture containing a styrene-butadiene copolymer. A 5 % sodium hydroxide aqueous solution was added to the mixture to adjust the pH to 8. Thereafter, unreacted monomer was removed by heated vacuum distillation and subsequently cooling was performed to 30 °C or lower to yield a water dispersion of the styrene-butadiene copolymer.

Next, a mixture of 90 parts of spherical artificial graphite (volume average particle size: 12 µm) and 10 parts of silicon oxide (SiOx, volume average particle diameter: 10 µm) as a negative electrode active material, 1 part of the obtained styrene-butadiene copolymer as a binder in terms of solid content, 1 part of carboxymethyl cellulose as a thickener, and an appropriate amount of water as a dispersion medium were stirred in a planetary mixer to prepare a slurry composition for a negative electrode.

### <Production of negative electrode>

A copper foil with a thickness of 15 µm was prepared as a current collector. The obtained slurry composition for a negative electrode was then applied to one side of the copper foil so that the coating amount of the slurry composition after drying would be 9 mg/cm² to 10 mg/cm². The drying was performed by conveying the copper foil through a 60 °C oven over a period of 2 min at a speed of 0.5 m/min. Thereafter, heat treatment was performed for 2 min in a 120 °C oven to obtain a negative electrode web. The obtained negative electrode web was rolled in sheet form by roll pressing so that the density of the negative electrode mixed material layer formed on the copper foil would be 1.6 g/cm³ to 1.7 g/cm³, to obtain a post-pressing negative electrode having a negative electrode mixed material layer formed on one side of the current collector made of copper foil.

### <Production of lithium ion secondary battery>

A single-layer separator made of polypropylene (having a width of 65 mm, a length of 500 mm, and a thickness of 25 µm; produced by a dry method; and having a porosity of 55 %) was prepared, and cut to 50 mm × 200 mm.

The obtained positive electrode was cut to 45 mm × 150 mm. Further, the obtained negative electrode was cut to 47 mm × 155 mm. The cut positive electrode, separator, and negative electrode were stacked in this order, and then wound to yield a wound body, which was placed in an aluminum packing case. Then, a LiPF₆ solution at a concentration of 1.0 M was charged as an electrolysis solution (the solvent was a mixture solvent of ethylene carbonate (EC) / ethylmethyl carbonate (EMC) = 3/7 (volume ratio), which contains 2 mass% vinylene carbonate as an additive). The aluminum packing case was then closed by heat sealing at 150 °C to tightly seal up the opening of the aluminum packing case. In this manner, a lithium ion secondary battery was produced.

Using the obtained lithium ion secondary battery, the output characteristics and cycle characteristics were evaluated by the foregoing methods. The results are listed in Table 1.

### (Example 2)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of styrene (ST) as an aromatic vinyl monomer was changed to 20 parts and the amount of 2-ethylhexyl acrylate (2EHA) as a (meth)acrylic acid ester monomer was changed to 52.5 parts. Measurement and evaluation were then performed in the same way as in Example 1. The results are listed in Table 1.

### (Example 3)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of styrene (ST) as an aromatic vinyl monomer was changed to 50 parts and the amount of 2-ethylhexyl acrylate (2EHA) as a (meth)acrylic acid ester monomer was changed to 22.5 parts. Measurement and evaluation were then performed in the same way as in Example 1. The results are listed in Table 1.

### (Example 4)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of acrylonitrile (AN) as an ethylenically unsaturated nitrile monomer was changed to 10 parts and the amount of 2-ethylhexyl acrylate (2EHA) as a (meth)acrylic acid ester monomer was changed to 52.5 parts. Measurement and evaluation were then performed in the same way as in Example 1. The results are listed in Table 1.

### (Example 5)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of acrylonitrile (AN) as an ethylenically unsaturated nitrile monomer was changed to 27.5 parts and the amount of 2-ethylhexyl acrylate (2EHA) as a (meth)acrylic acid ester monomer was changed to 35 parts. Measurement and evaluation were then performed in the same way as in Example 1. The results are listed in Table 1.

### (Example 6)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the conductive material dispersion liquid, acetylene black (produced by Denki Kagaku Kogyo Kabushiki Kaisha, AB35, Denka Black in powder form, number average particle diameter: 35 nm, BET specific surface area: 68 m²/g) was used as conductive carbon instead of CNTs. Measurement and evaluation were then performed in the same way as in Example 1. The results are listed in Table 1.

### (Example 7)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of methacrylic acid (MAA) as an ethylenically unsaturated carboxylic acid monomer was changed to 3 parts and the amount of 2-ethylhexyl acrylate (2EHA) as a (meth)acrylic acid ester monomer was changed to 47 parts. Measurement and evaluation were then performed in the same way as in Example 1. The results are listed in Table 1.

### (Example 8)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of methacrylic acid (MAA) as an ethylenically unsaturated carboxylic acid monomer was changed to 12 parts and the amount of 2-ethylhexyl acrylate (2EHA) as a (meth)acrylic acid ester monomer was changed to 38 parts. Measurement and evaluation were then performed in the same way as in Example 1. The results are listed in Table 1.

### (Example 9)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the conductive material dispersion liquid, the amount of the NMP solution of the polymer was changed to 5 parts in terms of solid content and, in the preparation of the slurry composition for a positive electrode, 0.5 parts of polyvinylidene fluoride (PVdF) in terms of solid content as other polymer was further added. Measurement and evaluation were then performed in the same way as in Example 1. The results are listed in Table 1.

### (Comparative Example 1)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of styrene (ST) as an aromatic vinyl monomer was changed to 5 parts and the amount of 2-ethylhexyl acrylate (2EHA) as a (meth)acrylic acid ester monomer was changed to 67.5 parts. Measurement and evaluation were then performed in the same way as in Example 1. The results are listed in Table 1.

### (Comparative Example 2)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of styrene (ST) as an aromatic vinyl monomer was changed to 65 parts and the amount of 2-ethylhexyl acrylate (2EHA) as a (meth)acrylic acid ester monomer was changed to 7.5 parts. Measurement and evaluation were then performed in the same way as in Example 1. The results are listed in Table 1.

### (Comparative Example 3)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of acrylonitrile (AN) as an ethylenically unsaturated nitrile monomer was changed to 0.05 parts and the amount of 2-ethylhexyl acrylate (2EHA) as a (meth)acrylic acid ester monomer was changed to 62.45 parts. Measurement and evaluation were then performed in the same way as in Example 1. The results are listed in Table 1.

### (Comparative Example 4)

A polymer, a conductive material dispersion liquid, a slurry composition for a positive electrode, a slurry composition for a negative electrode, a positive electrode, a negative electrode, and a lithium ion secondary battery were produced in the same way as in Example 1, except that, in the preparation of the polymer, the amount of acrylonitrile (AN) as an ethylenically unsaturated nitrile monomer was changed to 35 parts and the amount of 2-ethylhexyl acrylate (2EHA) as a (meth)acrylic acid ester monomer was changed to 27.5 parts. Measurement and evaluation were then performed in the same way as in Example 1. The results are listed in Table 1.

In Table 1, "CNT" denotes carbon nanotubes, "AcB" denotes acetylene black, "ST" denotes styrene, "AN" denotes acrylonitrile, "MAA" denotes methacrylic acid, "2EHA" denotes 2-ethylhexyl acrylate, "PVdF" denotes polyvinylidene fluoride, and "LCO" denotes lithium-containing cobalt oxide (LiCoO₂).

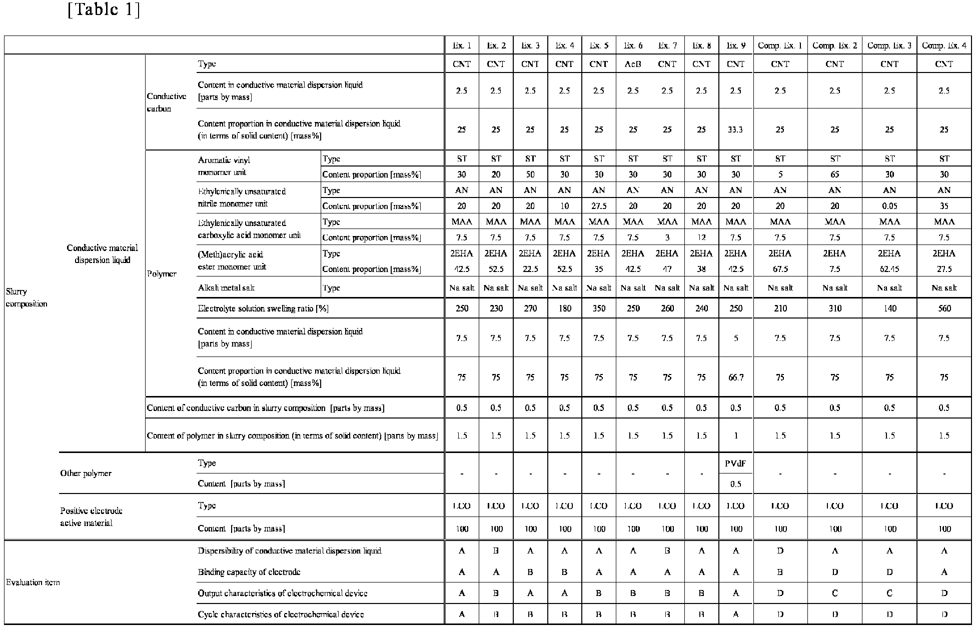

As can be understood from Table 1, in Examples 1 to 9 using, as the polymer, a copolymer containing an aromatic vinyl monomer unit and an ethylenically unsaturated nitrile monomer unit each in a predetermined range, the dispersibility of the conductive material dispersion liquid was good, the binding capacity between the electrode mixed material layer and the current collector in the electrode was good, and the high-potential cycle characteristics of the electrochemical device were excellent.

In Comparative Examples 1 to 4 using a polymer not having the foregoing predetermined composition, the high-potential cycle characteristics of the electrochemical device were noticeably poor. In Comparative Example 1 in which the content proportion of the aromatic vinyl monomer unit in the polymer was less than a predetermined proportion, the dispersibility of the conductive material dispersion liquid was noticeably poor. In Comparative Examples 2 to 3 in which the content proportion of the aromatic vinyl monomer unit in the polymer was more than a predetermined proportion or the content proportion of the ethylenically unsaturated nitrile monomer unit in the polymer was less than a predetermined proportion, the binding capacity of the electrode was noticeably poor.

### INDUSTRIAL APPLICABILITY

It is therefore possible to provide a slurry composition for an electrochemical device electrode with which an electrode having favorable binding capacity between an electrode mixed material layer and a current collector and an electrochemical device having excellent cycle characteristics can be obtained, and a conductive material dispersion liquid for an electrochemical device electrode having favorable dispersibility of a conductive material and capable of preparing the slurry composition.

It is also possible to provide an electrode for an electrochemical device having favorable binding capacity between an electrode mixed material layer and a current collector and enabling an electrochemical device to display excellent cycle characteristics, and an electrochemical device having excellent cycle characteristics.

It is further possible to provide a production method for a slurry composition with which an electrode having favorable binding capacity between an electrode mixed material layer and a current collector and an electrochemical device having excellent cycle characteristics can be obtained.

## Claims

1. A conductive material dispersion liquid for an electrochemical device electrode, comprising:
a conductive carbon;
a polymer; and
an organic solvent,
wherein the polymer is a copolymer containing 10 mass% or more and 60 mass% or less of an aromatic vinyl monomer unit and 0.1 mass% or more and 30 mass% or less of an ethylenically unsaturated nitrile monomer unit.

2. The conductive material dispersion liquid for an electrochemical device electrode according to claim 1, wherein the conductive carbon is conductive carbon fibers.

3. The conductive material dispersion liquid for an electrochemical device electrode according to claim 1 or 2, wherein the polymer further contains 0.1 mass% or more and 15 mass% or less of an ethylenically unsaturated carboxylic acid monomer unit.

4. The conductive material dispersion liquid for an electrochemical device electrode according to claim 3, wherein the polymer is an alkali metal salt.

5. A slurry composition for an electrochemical device electrode, comprising:
an electrode active material; and
the conductive material dispersion liquid for an electrochemical device electrode according to any one of claims 1 to 4.

6. An electrode for an electrochemical device, comprising:
a current collector; and
an electrode mixed material layer formed on at least one surface of the current collector using the slurry composition for an electrochemical device electrode according to claim 5.

7. An electrochemical device, comprising:
a positive electrode;
a negative electrode;
an electrolyte solution; and
a separator,
wherein at least one of the positive electrode and the negative electrode is the electrode for an electrochemical device according to claim 6.

8. A production method for a slurry composition for an electrochemical device electrode containing an electrode active material, a conductive carbon, a polymer, and an organic solvent, the polymer being a copolymer containing 10 mass% or more and 60 mass% or less of an aromatic vinyl monomer unit and 0.1 mass% or more and 30 mass% or less of an ethylenically unsaturated nitrile monomer unit, the production method comprising:
a step A of mixing the conductive carbon, the polymer, and the organic solvent to obtain a conductive material dispersion liquid; and
a step B of mixing the conductive material dispersion liquid obtained in the step A with the electrode active material to obtain a slurry composition for an electrochemical device electrode.
